# EUROPEAN PATENT APPLICATION

(11) **EP 3 001 514 A1**
(43) Date of publication of application: **30.03.2016**
(21) Application number: 15169928.7
(22) Date of filing: 29.05.2015
(51) Int. Cl.: H01R 13/66, A41D 1/00, A41D 3/02, H05B 3/02

(54) **ELECTRICAL PLUG CONNECTOR AND AN ELECTROTHERMAL ARTICLE INCLUDING THE SAME**

(30) Priority: 25.09.2014 TW 103133236
(71) Applicant: Yue, Steven, Taipei City 11463 (TW)
(72) Inventor: Yue, Steven, Taipei City 11463 (TW)
(74) Representative: V.O.

(57) **Abstract**

An electrical plug connector (2) includes a housing (3), a connector unit (4) and a temperature sensing unit (5). The housing includes a housing body (31) defining a receiving space, and a shell (32) extending from the housing body (31) and defining a cavity. The shell (32) is removably pluggable to a power supply (300). The connector unit (4) includes a supporting tongue (41) disposed in the receiving space and the cavity, a plurality of contacts (42) provided on the supporting tongue (41), and a connector cable (43) electrically interconnecting the contacts (42) and an electronic device (400). The temperature sensing unit (5) is disposed in at least one of the receiving space and the cavity for detecting a temperature associated with the supporting tongue (41).

## Description

The disclosure relates to an electrical plug connector and an electrothermal article including the same, more particularly to a Universal Serial Bus (USB) plug connector used to convey electricity provided by a power supply to an electronic device, and an electrothermal article including the USB plug connector.

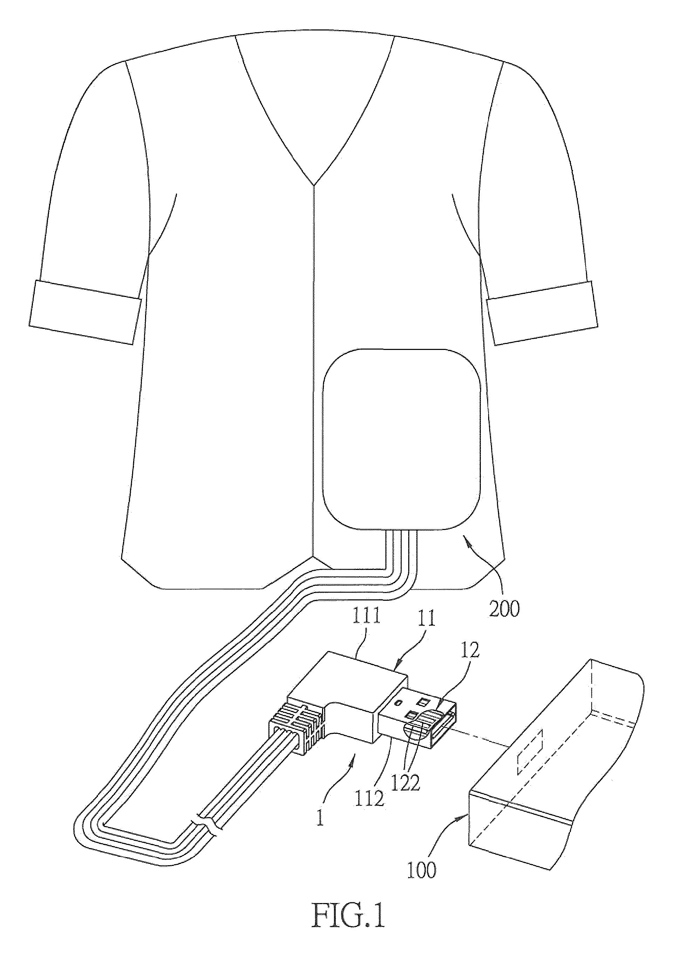

Referring to Figure 1, a conventional USB plug connector 1 is used to interconnect a power bank 100 and an electronic device 200 for enabling electricity supply from the power bank 100 to the electronic device 200. The electronic device 200 is to be disposed in an electronic apparatus, such as a mobile phone, an electrothermal garment, a computer and so forth. An electrothermal garment is given as an example for explanation purposes hereinafter.

The conventional USB plug connector 1 includes a housing 11 and a connector unit 12. The housing 11 includes a hollow housing portion 111 and a plug portion 112 which extends from the housing portion 111 and which is removably pluggable to the power bank 100. The connector unit 12 includes a plurality of contacts 122 each having a contacting end disposed in the plug portion 112. When the plug portion 112 is plugged to the power bank 100, the power bank 100, the plurality of contacts 122 and the electronic device 200 cooperate to form an electrically conductive path such that the electronic device 200 may be supplied with electricity stored in the power bank 100 through the plurality of contacts 122.

However, when output power of the power bank 100 to which the USB plug connector 1 is connected is abnormal or when there is a short circuit in the electronic device 200, the conventional USB plug connector 1 may overheat as a result of excessive electricity consumption in the electrically conductive path formed by the power bank 100, the contacts 122 and the electronic device 200. More severely, the conventional USB plug connector 1 may even have a risk of causing fire or explosion due to the excessive electricity consumption. Therefore, when a user wears the electrothermal garment including the electronic device 200 which is powered by the power bank 100 through electrical connection of the conventional USB plug connector 1, the user is exposed to a risk of being burned. Hence, how to improve the USB plug connector so as to prevent the aforementioned issue is an object the relevant industry endeavors to achieve.

Therefore, an object of the disclosure is to provide an electrical plug connector which is provided with temperature sensing capability so as to prevent overheating, and an electrothermal article including the electrical plug connector.

In a first aspect of the disclosure, an electrical plug connector is to be used to electrically interconnect an electronic device and a power supply that includes a receptacle connector. The electrical plug connector includes a housing, a connector unit and a temperature sensing unit. The housing includes a housing body which defines a receiving space, and a shell which extends from the housing body, which defines a cavity in spatial communication with the receiving space and which has an opening opposite to the housing body and in spatial communication with the cavity. The shell is removably pluggable to the receptacle connector of the power supply. The connector unit includes a supporting tongue, a plurality of contacts and a connector cable. The supporting tongue includes a first portion which is disposed in the receiving space and which is surrounded by the housing body, and a second portion which extends from the first portion toward the opening and which is disposed in the cavity. The plurality of contacts are provided on a surface of the second portion of the supporting tongue. The connector cable has a first end which is electrically connected to the plurality of contacts, and a second end which is opposite to the first end and which is to be electrically connected to the electronic device. The temperature sensing unit is disposed in at least one of the receiving space and the cavity for detecting a temperature associated with the supporting tongue.

In a second aspect of the disclosure, an electrothermal article is to be electrically connected to a power supply that includes a receptacle connector. The electrothermal article includes a wearable fabric member, an electronic device and an electrical plug connector. The electronic device is disposed in the wearable fabric member and is configured to be electrified to generate heat. The electrical plug connector is to be used to electrically interconnect the electronic device and the power supply. The electrical plug connector includes a housing, a connector unit and a temperature sensing unit. The housing includes a housing body which defines a receiving space, and a shell which extends from the housing body, which defines a cavity in spatial communication with the receiving space and which has an opening opposite to the housing body and in spatial communication with the cavity. The shell is removably pluggable to the receptacle connector of the power supply. The connector unit includes a supporting tongue, a plurality of contacts and a connector cable. The supporting tongue includes a first portion which is disposed in the receiving space and which is surrounded by the housing body, and a second portion which extends from the first portion toward the opening and which is disposed in the cavity. The plurality of contacts are provided on a surface of the second portion of the supporting tongue. The connector cable has a first end which is electrically connected to the plurality of contacts, and a second end which is opposite to the first end and which is electrically connected to the electronic device. The temperature sensing unit is disposed in at least one of the receiving space and the cavity for detecting a temperature associated with the supporting tongue.

Other features and advantages of the disclosure will become apparent in the following detailed description of the five embodiments with reference to the accompanying drawings, of which:
Figure 1 is a perspective view illustrating a conventional USB plug connector which interconnects a power bank and an electronic device;
Figure 2 is a fragmentary, cutaway perspective view of a first embodiment of an electrical plug connector according to the disclosure which interconnects a power supply and an electronic device;
Figure 3 is a partially exploded, fragmentary perspective view of the first embodiment of the electrical plug connector according to the disclosure;
Figure 4 is a cutaway schematic side-view diagram of a second embodiment of the electrical plug connector according to the disclosure;
Figure 5 is a cutaway schematic side-view diagram of a third embodiment of the electrical plug connector according to the disclosure;
Figure 6 is a cutaway schematic side-view diagram of a fourth embodiment of the electrical plug connector according to the disclosure;
Figure 7 is a cutaway schematic side-view diagram of a fifth embodiment of the electrical plug connector according to the disclosure; and
Figure 8 is a perspective view of the fifth embodiment of Figure 7.

Before the disclosure is described in greater detail, it should be noted that like elements are denoted by the same reference numerals throughout the disclosure.

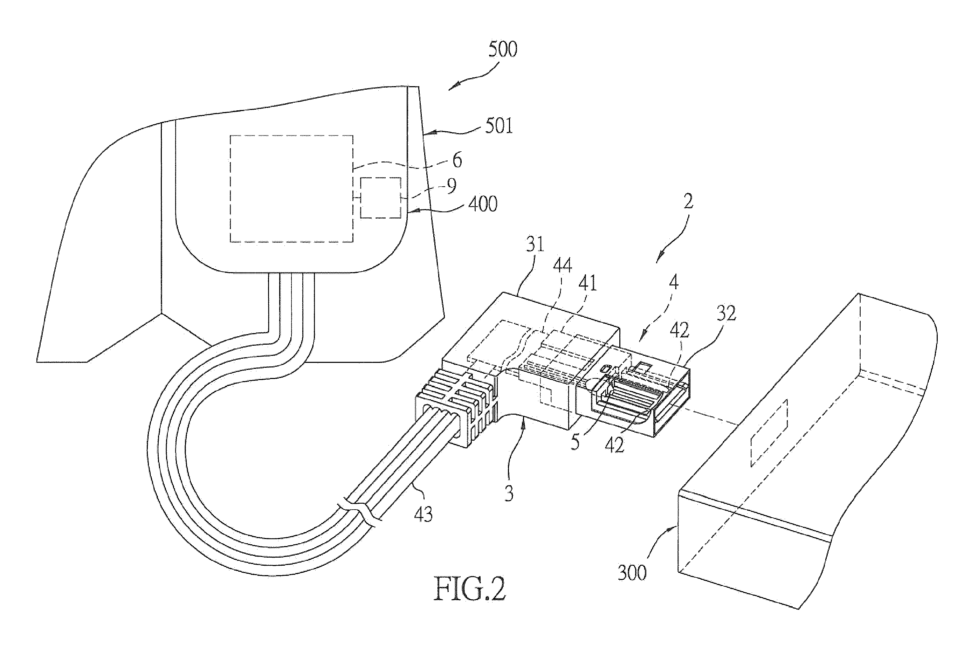

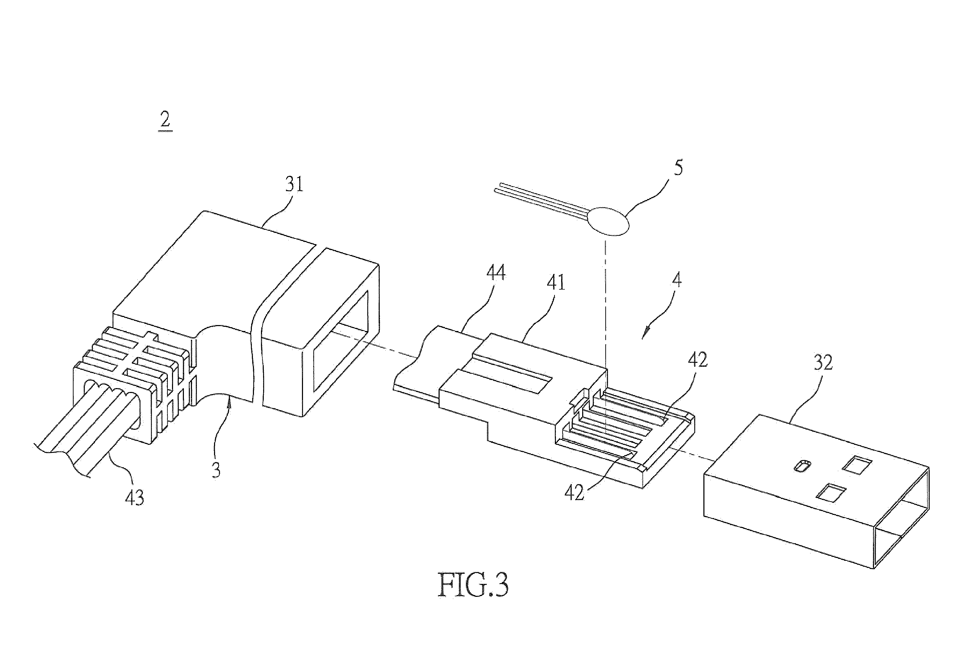

Referring to Figure 2 and Figure 3, a first embodiment of an electrical plug connector 2 according to the disclosure is to be used to electrically interconnect an electronic device 400 and a power supply 300 that includes a receptacle connector for enabling electricity supply from the power supply 300 to the electronic device 400. In this embodiment, the electrical plug connector 2 is a Universal Serial Bus (USB) plug connector, the power supply 300 is a power bank, and the electronic device 400 is to be disposed in a wearable fabric member 501 of an electrothermal article 500 and is configured to convert electricity into heat. Since the disclosure does not focus on the electronic device 400, detailed description of the same is omitted herein.

The electrical plug connector 2 includes a housing 3, a connector unit 4, a temperature sensing unit 5 disposed in the connector unit 4, and a controller 6 electrically connected to the temperature sensing unit 5.

The housing 3 includes a hollowing housing body 31 which defines a receiving space, and a shell 32 which extends from the housing body 31, which defines a cavity in spatial communication with the receiving space, and which has an opening opposite to the housing body 31 and in spatial communication with the cavity. The shell 32 is removably pluggable to the receptacle connector of the power supply 300.

The connector unit 4 includes a supporting tongue 41, a plurality of contacts 42, a connector cable 43 and a circuit board unit 44. The supporting tongue 41 includes a first portion 410 which is disposed in the receiving space and which is surrounded by the housing body 31, and a second portion 412 which extends from the first portion 410 toward the opening and which is disposed in the cavity. The plurality of contacts 42 are provided on a surface of the second portion 412 of the supporting tongue 41. The connector cable 43 has a first end which is electrically connected to the circuit board unit 44 and a second end which is opposite to the first end and which is to be electrically connected to the electronic device 400. The circuit board unit 44 electrically interconnects the plurality of contacts 42 and the connector cable 43. Specifically, the circuit board unit 44 is connected to the first portion 410 of the supporting tongue 41, and the plurality of contacts 42 extend into the first portion 410 of the supporting tongue 41 to electrically connect the circuit board unit 44. The plurality of contacts 42 are to be electrically connected to the power supply 300 when the shell 32 is plugged to the receptacle connector of the power supply 300. It is noted that in a variation of the first embodiment, the plurality of contacts 42 may be directly and electrically connected to the first end of the connector cable 43 so as to convey electricity provided by the power supply 300 to the electronic device 400. Since circuit configurations of the electrical plug connector 2 should be readily known to a skilled person in the relevant art, detailed description of the same is omitted for the sake of brevity.

The temperature sensing unit 5 is disposed in at least one of the receiving space and the cavity. In this embodiment, the temperature sensing unit 5 is disposed on the supporting tongue 41, is electrically connected to the circuit board unit 44, and is disposed in parallel with and spaced apart from the plurality of contacts 42 for detecting a temperature associated with the supporting tongue 41 (e.g., a temperature of the surroundings of the supporting tongue 41). In this embodiment, a thermocouple is adopted to serve as the temperature sensing unit 5.

The controller 6 is to be disposed at the electronic device 400, and is electrically connected via the connector cable 43 and the circuit board unit 44 to the temperature sensing unit 5. The controller 6 is configured to break electrical connection between the electronic device 400 and the power supply 300 so as to cut off power output of the power supply 300 upon determining that the temperature associated with the supporting tongue 41 detected by the temperature sensing unit 5 is greater than a preset temperature. In this embodiment, the controller 6 is a processor provided with a temperature control switch. Note that the controller 6 may be alternatively disposed at the connector unit 4, and should not be limited to being disposed at the electronic device 400.

When the electrical plug connector 2 is used, the shell 32 is plugged to the receptacle connector of the power supply 300. Meanwhile, electricity stored in the power supply 300 may be transmitted through the plurality of contacts 42, the circuit board unit 44 and the connector cable 43 to the electronic device 400. Specifically, the temperature sensing unit 5 transmits the temperature associated with the supporting tongue 41 thus detected via the circuit board unit 44 and the connector cable 43 to the controller 6. The controller 6 is configured to compare the temperature received from the temperature sensing unit 5 with the preset temperature, and is configured to break electrical connection between the power supply 300 and the electronic device 400 so as to cease power supply to the electronic device 400 upon determining that the temperature associated with the supporting tongue 41 is greater than the preset temperature. In this way, the power supply 300, the electrical plug connector 2 and the electronic device 400 may be prevented from generating excessive heat during usage even if one of them does not work properly.

In this embodiment, the electrical plug connector 2 further includes an indicator 9 which is to be disposed in the electrothermal article 500 and which is coupled electrically to the controller 6. The indicator 9 is controlled by the controller 6 to generate an indication to the outside of the electrothermal article 500 when the controller 6 determines that the temperature detected by the temperature sensing unit 5 is abnormal (e.g., greater than a threshold temperature). For example, the indicator 9 is a light-emitting diode (LED) controllable to emit red light to serve as the indication. In an abnormal overheating condition, the indicator 9 is controlled to emit red light outwardly of the electrothermal article 500 to alert a user of the abnormal overheating condition. In this way, safety measures may be taken correspondingly.

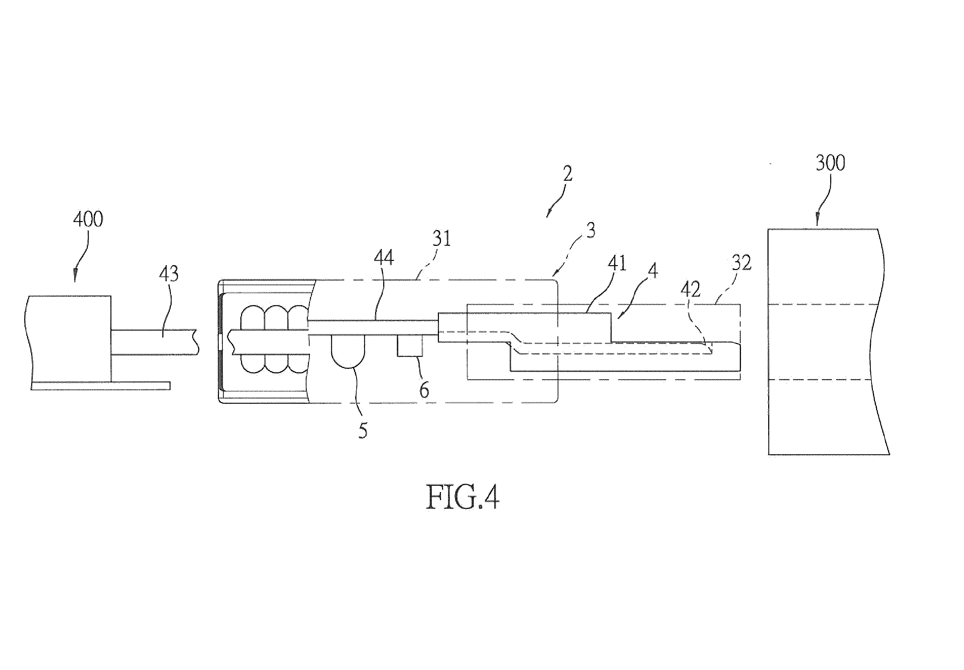

Referring to Figure 4, a second embodiment of the electrical plug connector 2 according to the disclosure is similarly used to electrically interconnect the power supply 300 and the electronic device 400, so as to enable electricity supply from the power supply 300 to the electronic device 400. The electrical plug connector 2 includes a housing 3, a connector unit 4, a temperature sensing unit 5 and a controller 6 which are disposed on the connector unit 4.

The second embodiment is similar to the first embodiment, and differs therefrom in that the controller 6 is disposed on and electrically connected to the circuit board unit 44 of the connector unit 4 such that the controller 6 is electrically connected to the temperature sensing unit 5. Similarly, the controller 6 is configured to maintain electrical connection between the connector cable 43 and the electronic device 400 upon determining that the temperature associated with the supporting tongue 41 detected by the temperature sensing unit 5 is not greater than a preset temperature. The controller 6 is further configured to break electrical connection between the plurality of contacts 42 and the connector cable 43 upon determining that the temperature associated with the supporting tongue 41 detected by the temperature sensing unit 5 is greater than the preset temperature. In this embodiment, a temperature control switch is adopted to serve as the controller 6.

When the electrical plug connector 2 is used, the shell 32 is plugged to the receptacle connector of the power supply 300. Meanwhile, electricity stored in the power supply 300 may be transmitted through an electrically conductive path formed by the plurality of contacts 42 (only one is illustrated), the circuit board unit 44 and the connector cable 43 to the electronic device 400, so as to provide electricity required by the electronic device 400.

Specifically, the temperature sensing unit 5 transmits the temperature associated with the supporting tongue 41 thus detected via the circuit board unit 44 to the controller 6. The controller 6 is configured to compare the temperature received from the temperature sensing unit 5 with the preset temperature, and is configured to break electrical connection between the plurality of contacts 42 and the connector cable 43 so as to cease power supply from the power supply 300 to the electronic device 400 upon determining that the temperature associated with the supporting tongue 41 is greater than the preset temperature. In this way, during usage of the electrical plug connector 2 of the disclosure to interconnect the power supply 300 and the electronic device 400 for electricity supply thereto, when one of the power supply 300 and the electronic device 400 does not operate properly and would possibly result in overheating, the electrical plug connector 2 itself is able to break electrical connection between the power supply 300 and the electronic device 400 by means of the controller 6 even if the electronic device 400 is not provided with a circuit design to break electricity supply of the power supply 300. Therefore, safety concern resulting from overheating of the power supply 300 and the electronic device 400 may be mitigated.

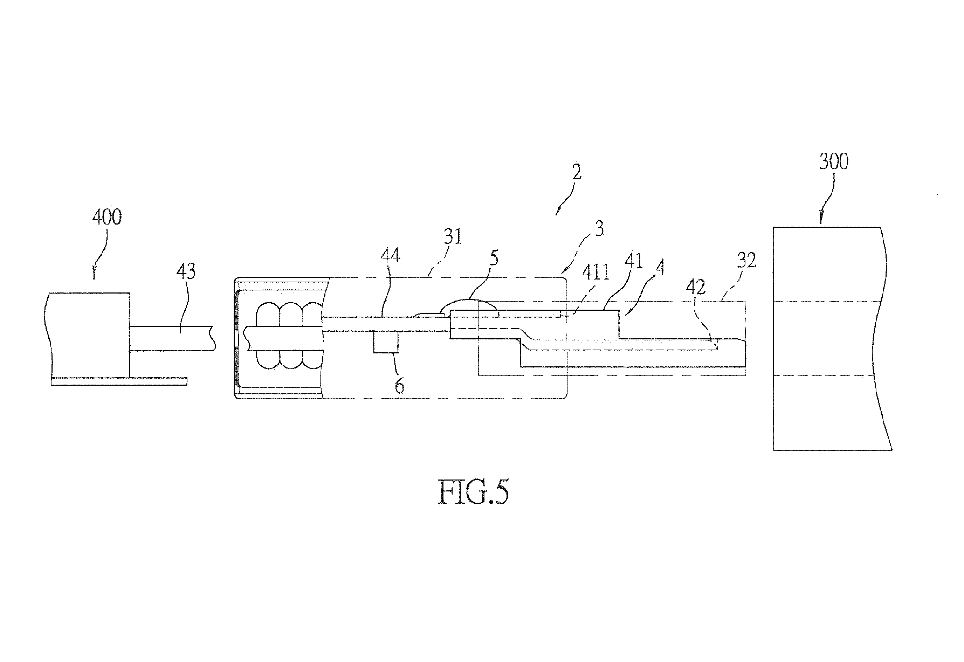

Referring to Figure 5, a third embodiment of the electrical plug connector 2 according to the disclosure is similar to the second embodiment, and differs from the second embodiment mainly in the arrangement of the temperature sensing unit 5.

The supporting tongue 41 of the third embodiment further includes a recess 411 formed on a surface of the first portion 410 of the supporting tongue 41. The temperature sensing unit 5 is disposed in the recess 411 and has a terminal 51 which is electrically connected to the circuit board unit 44 and which contacts the plurality of contacts 42 (only one is illustrated) extending into the first portion 410 of the supporting tongue 41, such that the temperature sensing unit 5 is able to directly detect a temperature of the plurality of contacts 42 to serve as the temperature associated with the supporting tongue 41. In this way, an operating temperature of the electrical plug connector 2 which is used to electrically interconnect the power supply 300 and the electronic device 400 for electricity supply may be obtained in a more direct and sensitive manner. Similar to the second embodiment, by means of the temperature sensing unit 5 which detects the temperature and the controller 6 which maintains or breaks the electrical connection, safety concern over the possibility of the electronic device 400 and the power supply 300 overheatingas a result of malfunctions during usage of the electrical plug connector 2 for electrical interconnection therebetween can be mitigated.

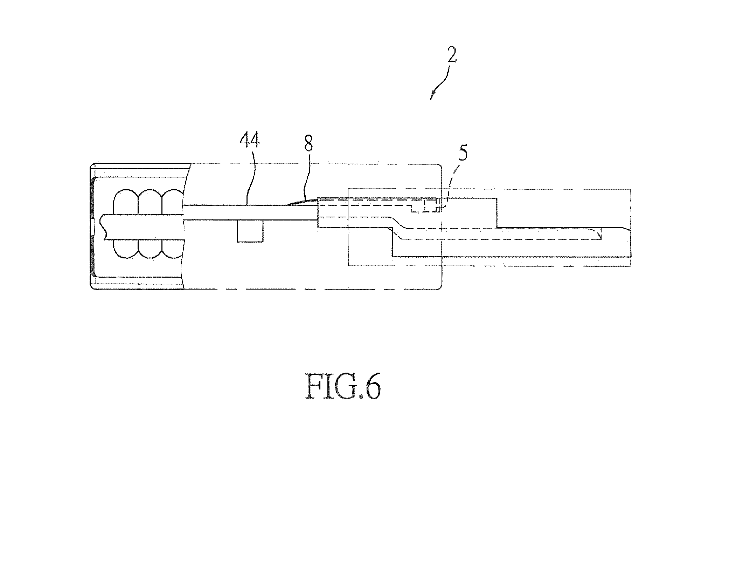

Referring to Figure 6, a fourth embodiment of the electrical plug connector 2 according to the disclosure is similar to the third embodiment, and differs therefrom in that a temperature sensing chip is adopted to serve as the temperature sensing unit 5 of the electrical plug connector 2. Moreover, the electrical plug connector 2 further includes a flexible circuit board 8 on which the temperature sensing unit 5 is disposed. The flexible circuit board 8 is electrically connected to the circuit board unit 44 of the electrical plug connector 2. Accordingly, the fourth embodiment can not only break external electricity input upon detecting abnormal operating temperature, but can also allow flexible positioning of the temperature sensing unit 5 by virtue of flexibility of the flexible circuit board 8, such that circuit layout of the circuit board unit 44 is relatively adaptable and unrestricted.

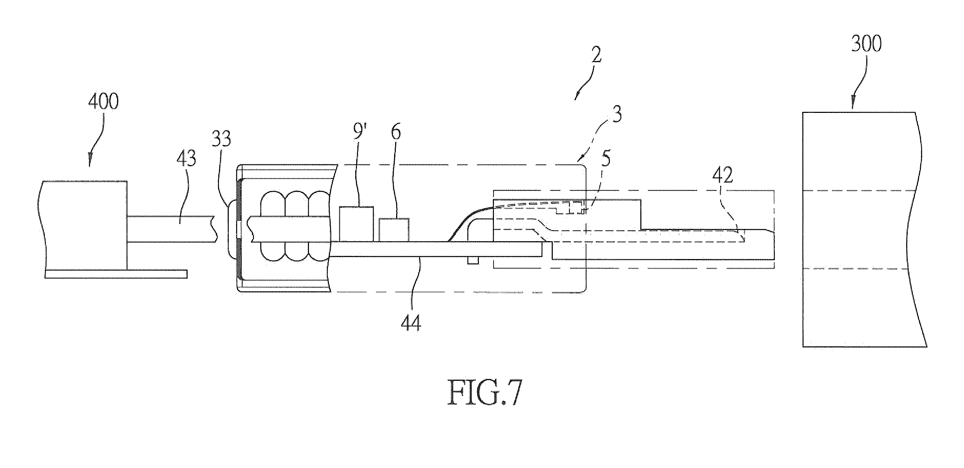

Referring to Figure 7, a fifth embodiment of the electrical plug connector 2 according to the disclosure is similar to the fourth embodiment, and differs from the fourth embodiment in that this embodiment further includes an indicator 9' disposed on and electrically connected to the circuit board unit 44 of the electrical plug connector 2. In addition, the housing 3 further includes a light guide portion 33 which is formed on the housing body 31, which corresponds in position to the indicator 9' and which permits passage of light therethrough. The controller 6 controls the indicator 9' to generate an indication which is to be emitted outwardly of the housing body 31 through the light guide portion 33 upon determining that the operating temperature of the electrical plug connector 2 detected by the temperature sensing unit 5 is abnormal (e.g., greater than a preset temperature). In this embodiment, the indicator 9' is an LED controllable to emit a light beam (e.g., red light) to serve as the indication. When the electrical plug connector 2 according to the embodiment is plugged to the power supply 300 and is electrically connected to the electronic device 400, in an abnormal overheating condition, the indicator 9' is controlled to emit red light outwardly through the light guide portion 33 to alert a user of the abnormal overheating condition. In this way, safety measures may be taken correspondingly.

It is noted that, in order to further promote safety, by virtue of circuit design of the controller 6 of the electrical plug connector 2, the controller 6 can further monitor current output of the power supply 300. Specifically, the controller 6 may be further configured to detect a current flowing through at least one of the plurality of contacts 42. Upon determining that the current flowing through at least one of the plurality of contacts 42 thus detected does not conform to a preset rated current associated with the electronic device 400, the controller 6 controls the indicator 9' to generate the indication, and/or simultaneously breaks electrical connection between the plurality of contacts 42 and the connector cable 43 so as to cut off power output of the power supply 300. For example, if the preset rated current of the electronic device 400 is 1 ampere, when the controller 6 detects that the current flowing through at least one of the plurality of contacts 42 (i.e., output current of the power supply 300) is 2 amperes, the controller 6 controls the indicator 9' to emit red light for alert purposes, and simultaneously breaks electrical connection between the plurality of contacts 42 and the connector cable 43, so as to ensure safe usage of the electronic device 400.

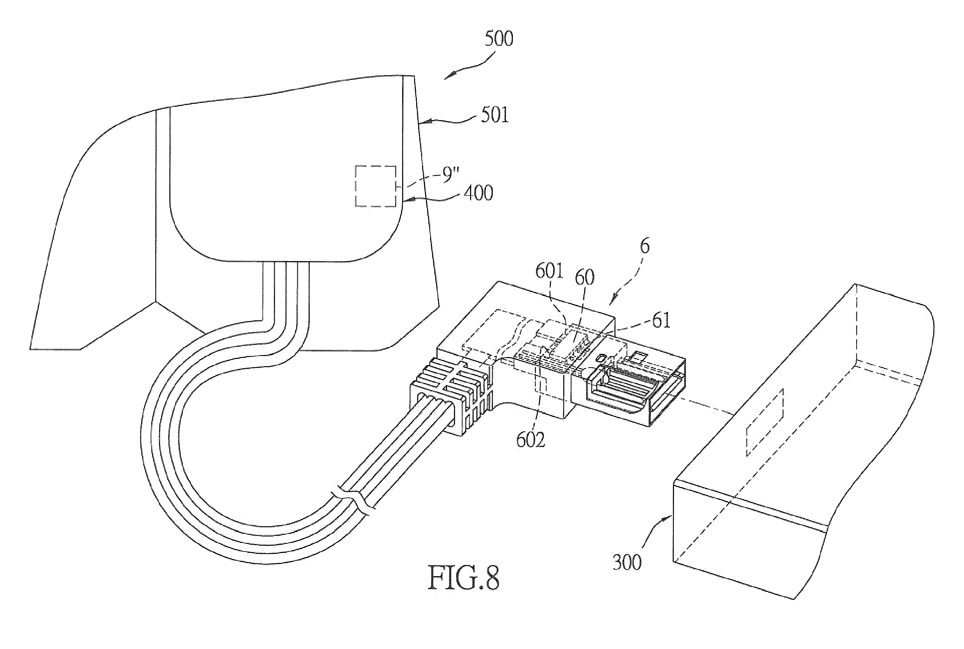

Referring to Figure 7 and Figure 8, the controller 6 is a microprocessor, which includes a control chip 60, as well as a set of detector pins 61, a first output pin 601 and a second output pin 602 which are connected to the control chip 60. The control chip 60 is configured to determine whether an output voltage of the power supply 300 is within a predefined range (e.g., between +3.5V and -3.5V) according to signals transmitted through the plurality of contacts 42 and received at the set of detector pins 61. When it is determined by the control chip 60 that the output voltage is not within the predefined range, the control chip 60 provides the output current of the power supply 300 received at the set of detector pins 61 to a first load (for example, resistance heating coils of the electronic device 400 with lower resistance) via the first output pin 601. When it is determined by the control chip 60 that the output voltage is within the predefined range, the control chip 60 provides the output current of the power supply 300 received at the set of detector pins 61 to a second load (for example, resistance heating coils of the electronic device 400 with higher resistance) via the second output pin 602. The resistance of the second load is greater than that of the first load. Through this design, by determining whether the output voltage is within a designated voltage range, the controller 6 is configured to provide the output current to flow through the first load with lower resistance upon determining that the output voltage is not within the designated voltage range, such that the electrothermal article 500 heats up in a normal mode. On the other hand, the controller 6 is configured to provide the output current to flow through the second load with higher resistance upon determining that the output voltage is within the designated voltage range, such that the electrothermal article 500 heats up in an instant-heating mode.

To sum up, by means of the temperature sensing unit 5 and the controller 6, in the duration of interconnecting the power supply 300 and the electronic device 400 for allowing electricity transmission between the two therethrough, the electrical plug connector 2 according to the disclosure is able to detect the temperature associated with the connector unit 4, and is able to break electrical connection between the power supply 300 and the electronic device 400 so as to cut off the electricity transmission. Accordingly, an issue of overheating of the power supply 300, the electrical plug connector 2 and the electronic device 400 resulting from malfunctions thereof during electrical interconnection of the power supply 300 and the electronic device 400 using the electrical plug connector 2 may be prevented, so as to ensure safety during power transmission from the power supply 300 to the electronic device 400.

While the disclosure has been described in connection with what is(are) considered the exemplary embodiment(s), it is understood that this disclosure is not limited to the disclosed embodiment(s) but is intended to cover various arrangements included within the spirit and scope of the broadest interpretation so as to encompass all such modifications and equivalent arrangements.

## Claims

1. An electrical plug connector (2) to be used to electrically interconnect an electronic device (400) and a power supply (300) that includes a receptacle connector, said electrical plug connector (2) **characterized by**:
a housing (3) which includes
a housing body (31) defining a receiving space, and
a shell (32) extending from said housing body (31), defining a cavity in spatial communication with the receiving space, and having an opening opposite to said housing body (31) and in spatial communication with the cavity, said shell (32) being removably pluggable to the receptacle connector of the power supply (300);
a connector unit (4) which includes
a supporting tongue (41) including a first portion (410) which is disposed in the receiving space and which is surrounded by said housing body (31), and a second portion (412) which extends from said first portion (410) toward the opening and which is disposed in the cavity,
a plurality of contacts (42) provided on a surface of saidsecondportion (412) of said supporting tongue (41), and
a connector cable (43) having a first end which is electrically connected to said plurality of contacts (42) and a second end which is opposite to the first end and which is to be electrically connected to the electronic device (400); and
a temperature sensing unit (5) disposed in at least one of the receiving space and the cavity for detecting a temperature associated with said supporting tongue (41).

2. The electrical plug connector (2) according to Claim 1, further **characterized by** a controller (6) which is to be disposed at the electronic device (400) and which is electrically connected via said connector cable (43) to said temperature sensing unit (5) that is electrically coupled to the first end of said connector cable (43) ;
wherein said plurality of contacts (42) are to be electrically connected to the power supply (300) when said shell (32) is plugged to the receptacle connector of the power supply (300), said controller (6) being configured to break electrical connection between the electronic device (400) and the power supply (300) upon determining that the temperature associated with said supporting tongue (41) detected by said temperature sensing unit (5) is greater than a preset temperature.

3. The electrical plug connector (2) according to Claim 2, the electronic device (400) being provided with a first load, and a second load which has a resistance greater than that of the first load, **characterized in that**:
said controller (6) is further electrically connected to said plurality of contacts (42), and is configured to determine whether an output voltage of the power supply (300) is within a predefined range according to signals transmitted through said plurality of contacts (42) and received by said controller (6);
when it is determined by said controller (6) that the output voltage is not within the predefined range, said controller (6) provides output current of the power supply (300) to the first load of the electronic device (400); and
when it is determined by said controller (6) that the output voltage is within the predefined range, said controller (6) provides the output current of the power supply (300) to the second load of the electronic device (400).

4. The electrical plug connector (2) according to any one of Claims 1 to 3, **characterized in that**:
said plurality of contacts (42) extend into said first portion (410) of said supporting tongue (41); and
said supporting tongue (41) further includes a recess (411) formed on a surface of said first portion (410) of said supporting tongue (41), said temperature sensing unit (5) being disposed in said recess (411) and having a terminal which contacts said plurality of contacts (42) extending into said first portion (410) of said supporting tongue (41).

5. The electrical plug connector (2) according to Claim 1, further **characterized by** a controller (6) which is disposed in the receiving space and which is electrically connected to said temperature sensing unit (5);
wherein said controller (6) is configured to break electrical connection between said plurality of contacts (42) and said connector cable (43) upon determining that the temperature associated with said supporting tongue (41) detected by said temperature sensing unit (5) is greater than a preset temperature.

6. The electrical plug connector (2) according to Claim 5, the electronic device (400) being provided with a first load, and a second load which has a resistance greater than that of the first load, **characterized in that**:
said controller (6) is further electrically connected to said plurality of contacts (42), and is configured to determine whether an output voltage of the power supply (300) is within a predefined range according to signals transmitted through said plurality of contacts (42) and received by said controller (6);
when it is determined by said controller (6) that the output voltage is not within the predefined range, said controller (6) provides output current of the power supply (300) to the first load of the electronic device (400); and
when it is determined by said controller (6) that the output voltage is within the predefined range, said controller (6) provides the output current of the power supply (300) to the second load of the electronic device (400).

7. The electrical plug connector (2) according to Claims 5 or 6, **characterized in that** said connector unit (4) further includes a circuit board unit (44) which electrically interconnects said plurality of contacts (42) and said connector cable (43), said controller (6) being disposed on and electrically connected to said circuit board unit (44).

8. The electrical plug connector (2) according to Claim 7, further **characterized by** a flexible circuit board (8) on which said temperature sensing unit (5) is disposed, said flexible circuit board (8) electrically interconnecting said temperature sensing unit (5) and said circuit board unit (44).

9. The electrical plug connector (2) according to Claim 7, further **characterized by** an indicator (9') disposed on and electrically connected to said circuit board unit (44), said controller (6) controlling said indicator (9') to generate an indication upon determining that the temperature associated with said supporting tongue (41) detected by said temperature sensing unit (5) is greater than the preset temperature.

10. The electrical plug connector (2) according to Claim 9, **characterized in that** said indicator (9') is a light-emitting diode (LED) controllable to emit a light beam to serve as the indication.

11. The electrical plug connector (2) according to Claim 7, further **characterized by** an indicator (9') disposed on and electrically connected to said circuit board unit (44) ;
wherein said controller (6) is further configured to detect a current flowing through at least one of said plurality of contacts (42), said controller (6) controlling said indicator (9') to generate an indication upon determining that the current flowing through at least one of said plurality of contacts (42) thus detected does not conform to a preset rated current associated with the electronic device (400).

12. The electrical plug connector (2) according to Claim 11, **characterized in that** said controller (6) further breaks electrical connection between said plurality of contacts (42) and said connector cable (43) upon determining that the current flowing through at least one of said plurality of contacts (42) thus detected does not conform to a preset rated current associated with the electronic device (400).

13. The electrical plug connector (2) according to Claim 11, **characterized in that** said indicator (9') is an LED controllable to emit a light beam to serve as the indication.

14. The electrical plug connector (2) according to Claim 1, configured as a Universal Serial Bus (USB) plug connector.

15. An electrothermal article to be electrically connected to a power supply (300) that includes a receptacle connector, said electrothermal article **characterized by**:
a wearable fabric member (501);
an electronic device (400) disposed in said wearable fabric member (501) and configured to be electrified to generate heat; and
an electrical plug connector (2) to be used to electrically interconnect said electronic device (400) and the power supply (300), and including
a housing (3) which includes
a housing body (31) defining a receiving space, and
a shell (32) extending from said housing body (31), defining a cavity in spatial communication with the receiving space, and having an opening opposite to said housing body (31) and in spatial communication with the cavity, said shell (32) being removably pluggable to the receptacle connector of the power supply (300),
a connector unit (4) which includes
a supporting tongue (41) including a first portion (410) which is disposed in the receiving space and which is surrounded by said housing body (31), and a second portion (412) which extends from said first portion (410) toward the opening and which is disposed in the cavity,
a plurality of contacts (42) provided on a surface of said second portion (412) of said supporting tongue (41), and
a connector cable (43) having a first end which is electrically connected to said plurality of contacts (42) and a second end which is opposite to the first end and which is electrically connected to said electronic device (400), and a temperature sensing unit (5) disposed in at least one of the receiving space and the cavity for detecting a temperature associated with said supporting tongue (41).

16. The electrothermal article according to Claim 15, further **characterized by** a controller (6) which is disposed at said electronic device (400) and which is electrically connected via said connector cable (43) to said temperature sensing unit (5) that is electrically coupled to the first end of said connector cable (43) ;
wherein said plurality of contacts (42) are to be electrically connected to the power supply (300) when said shell (32) is plugged to the receptacle connector of the power supply (300), said controller (6) being configured to break electrical connection between said electronic device (400) and the power supply (300) upon determining that the temperature associated with said supporting tongue (41) detected by said temperature sensing unit (5) is greater than a preset temperature.

17. The electrothermal article according to Claim 16, further comprising a first load, and a second load which has a resistance greater than that of said first load, **characterized in that**:
said controller (6) is further electrically connected to said plurality of contacts (42), and is configured to determine whether an output voltage of the power supply (300) is within a predefined range according to signals transmitted through said plurality of contacts (42) and received by said controller (6);
when it is determined by said controller (6) that the output voltage is not within the predefined range, said controller (6) provides output current of the power supply (300) to said first load; and
when it is determined by said controller (6) that the output voltage is within the predefined range, said controller (6) provides the output current of the power supply (300) to said second load.

18. The electrothermal article according to any one of Claims 15 to 17, **characterized in that**:
saidplurality of contacts (42) extend into said first portion (410) of said supporting tongue (41); and
said supporting tongue (41) further includes a recess (411) formed on a surface of said first portion (410) of said supporting tongue (41), said temperature sensing unit (5) being disposed in said recess (411) and having a terminal which contacts said plurality of contacts (42) extending into said first portion (410) of said supporting tongue (41).

19. The electrothermal article according to Claim 15, further **characterized by** a controller (6) which is disposed in the receiving space and which is electrically connected to said temperature sensing unit (5);
wherein said connector unit (4) further includes a circuit board unit (44) which electrically interconnects said plurality of contacts (42) and said connector cable (43), said controller (6) being disposed on and electrically connected to said circuit board unit (44) ;
wherein said controller (6) is configured to break electrical connection between said electronic device (400) and the power supply (300) upon determining that the temperature associated with said supporting tongue (41) detected by said temperature sensing unit (5) is greater than a preset temperature.

20. The electrothermal article according to Claim 19, further **characterized by** a first load, and a second load which has a resistance greater than that of said first load;
wherein said controller (6) is further electrically connected to said plurality of contacts (42), and is configured to determine whether an output voltage of the power supply (300) is within a predefined range according to signals transmitted through said plurality of contacts (42) and received by said controller (6);
wherein, when it is determined by said controller (6) that the output voltage is not within the predefined range, said controller (6) provides output current of the power supply (300) to said first load; and
wherein, when it is determined by said controller (6) that the output voltage is within the predefined range, said controller (6) provides the output current of the power supply (300) to said second load.

21. The electrothermal article according to Claim 15, **characterized in that** said electrical plug connector (2) is a Universal Serial Bus (USB) plug connector.
